# EUROPEAN PATENT APPLICATION

(11) **EP 2 560 094 A1**
(43) Date of publication of application: **20.02.2013**
(21) Application number: 11768757.4
(22) Date of filing: 06.04.2011
(51) Int. Cl.: G06F 9/445

(54) **PORTABLE INFORMATION DISPLAY TERMINAL**

(30) Priority: 16.04.2010 JP 2010095079
(71) Applicant: Funai Electric Co., Ltd., Daito-shi Osaka 574-0013 (JP)
(72) Inventor: MASAKI, Yasuo, Daito-shi Osaka 574-0013 (JP); KOHNO, Sei, Daito-shi Osaka 574-0013 (JP)
(74) Representative: Grünecker, Kinkeldey, Stockmair & Schwanhäusser
(86) International application number: PCT/JP2011/058685
(87) International publication number: WO 2011/129236

(57) **Abstract**

Provided is a portable information display terminal capable of automatically starting an appropriate application program according to not only the time but also the use state of the portable information display terminal. The portable information display terminal (1) is provided with a housing (20), a use state detection means (53) for detecting the use state, a time detecting means (51a) for detecting the current time, and a control portion (51, 151, 251) for starting an application program corresponding to the use state detected by the use state detection means and the current time detected by the time detection means.

## Description

### Technical Field

The present invention relates to a portable information display terminal, and more particularly, it relates to a portable information display terminal including a housing.

### Background Technique

A portable information display terminal including a housing is known in general. Such a portable information display terminal is disclosed in Japanese Patent Laying-Open No. 11-212893, for example.

In Japanese Patent Laying-Open No. 11-212893, there is disclosed a portable computer (portable information display terminal) including a set time register (time detection means) detecting a time. The set time register of the portable computer according to this Japanese Patent Laying-Open No. 11-212893 is so formed that a time for starting software (application program) preferred by the user can be previously set by the user. Further, this portable computer is formed to automatically start the set software at the set time in a case where the time for starting the preferred software is previously set by the user.

### Prior Art

### Patent Document

Patent Document 1: Japanese Patent Laying-Open No. 11-212893

### Summary of the Invention

### Problem to be Solved by the Invention

In the portable computer (portable information display terminal) according to Japanese Patent Laying-Open No. 11-212893, it is possible to automatically start the set software at the set time, while it is conceivable that there are many cases where application programs used by the user vary with use states (a state where the user places the portable computer on a placing surface or the like, a state where the portable computer is grasped by the user, and the like, for example). In the portable computer (portable information display terminal) according to the aforementioned Japanese patent Laying-Open No. 11-212893, however, there is such a problem that it is difficult to automatically start a proper application program in response to the use state (the state where the user places the portable computer on the placing surface or the like, the state where the portable computer is grasped by the user or the like, for example) of the portable information display terminal.

The present invention has been proposed in order to solve the aforementioned problem, and an object of the present invention is to provide a portable information display terminal capable of automatically starting a proper application program in response to not only a time but also a use state of the portable information display terminal.

### Means for Solving the Problem and Effects of the Invention

A portable information display terminal according to an aspect of the present invention includes a housing, a use state detection means for detecting a use state, a time detection means detecting a current time, and a control portion starting an application program corresponding to the use state detected by the use state detection means and the current time detected by the time detection means.

In the portable information display terminal according to the aspect of the present invention, as hereinabove described, the control portion starts the application program corresponding to the use state detected by the use state detection means and the current time detected by the time detection means, whereby the same can automatically start a proper application program not only corresponding to the current time detected by the time detection means but also corresponding to the use state detected by the use state detection means, dissimilarly to a case where an application program is started on the basis of only detection of the current time by the time detection means.

Preferably, the portable information display terminal according to the aforementioned aspect is so formed that the user is capable of setting an application program started in response to the use state and the current time, and the control portion is formed to perform control of starting the application program set by the user in response to the use state and the current time. When forming the portable information display terminal in this manner, the user so previously sets the application program started in response to the use state and the current time that the control portion can automatically start the application program set by the user in a case where the user detects the use state at a certain current time, whereby the same can start an application program coinciding with a use mode of the user in the use state and at the current time.

Preferably in this case, setting of a starting time zone for starting the application program corresponding to the current time is so formed that at least any setting in setting of the starting time zone every day of the week, setting of the starting time zone distinguishing weekdays and holidays from each other and setting of the starting time zone without distinction of the day of the week and the holidays is possible. When forming the portable information display terminal in this manner, setting of the starting time zone can be detailedly performed, whereby the control portion can start an application program more coinciding with the use mode (use time and the use state) of the user.

Preferably, the portable information display terminal according to the aforementioned aspect further includes a display portion displaying information, and the control portion is formed to perform control capable of simultaneously parallelly starting an application program using the display portion and an application program not using the display portion when starting application programs in response to the use state and the current time. When forming the portable information display terminal in this manner, the user can simultaneously use both application programs of the application program using the display portion and the application program not using the application program. Thus, convenience for the user can be improved.

Preferably in this case, the use state includes a use state where the user uses the portable information display terminal while standing the housing on a placing surface, and the control portion is formed to perform control of simultaneously parallelly starting the application program using the display portion and the application program not using the display portion in a case where the use state detected by the use state detection means is at least the use state where the user uses the portable information display terminal while standing the housing on the placing surface. Thus, in the use state where the user uses the portable information display terminal while standing the housing on the placing surface, it is conceivable that a possibility for such a case that the user watches, listens to and receives information transmitted from the portable information display terminal stood on the placing surface is higher than that for a case where the user positively performs an operation on the portable information display terminal. In such a situation, the control portion is capable of simultaneously parallelly starting the application program using the display portion and the application program not using the display portion, whereby the portable information display terminal can be more effectively practically used.

Preferably, the portable information display terminal including the aforementioned display portion is so formed that the user is capable of setting the application program started in response to the use state and the current time, and setting of the starting time zone at the time of simultaneously parallelly starting the application program using the display portion and the application program not using the display portion is formed to be independently performable for the application program using the display portion and for the application program not using the display portion. When forming the portable information display terminal in this manner, the setting of the starting time zone can be separately performed for the application program using the display portion and for the application program not using the display portion, whereby the convenience for the user can be more improved.

Preferably, the portable information display terminal including the aforementioned display portion further includes an image pickup portion capable of picking up an image, and the application program not using the display portion includes at least either one of an application program monitoring an invader with the image pickup portion and an application program transmitting information consisting of a sound to the user. When forming the portable information display terminal in this manner, the aforementioned application program is startable without using the display portion, whereby a specific function possessed by the portable information display terminal can be more effectively practically used.

Preferably in the portable information display terminal according to the aforementioned aspect, the control portion is formed to perform control of starting an application program corresponding to the use state detected by the use state detection means, corresponding also to a transition mode at a time of making a transition from a use state before the detected use state to the detected use state, and corresponding to the current time. When forming the portable information display terminal in this manner, the control portion can start the application program in consideration of not only the current use state and the current time but also the transition mode from an immediately precedent use state to the current use state, whereby the same can start an application program more suitable to a use situation also in consideration of difference between use situations of the user resulting from difference between transition modes.

Preferably in the portable information display terminal according to the aforementioned aspect, the use state includes a first use state where the user uses the portable information display terminal while manually grasping the housing, and the control portion is formed to perform control of starting an application program corresponding to the first use state and corresponding to the current time in a case where the first use state is detected by the use state detection means. When forming the portable information display terminal in this manner, the control portion can start an application program suitable to a use situation where the user manually grasps the housing and the current time by starting the application program corresponding to the first use state where the user uses the portable information display terminal while manually grasping the housing and corresponding to the current time.

Preferably in this case, the portable information display terminal further includes a display portion displaying information, the first use state includes a laterally oriented use state and a vertically oriented use state, the use state detection means is formed to be capable of detecting the laterally oriented use state and the vertically oriented use state, and the control portion is formed to perform control of starting an application program corresponding to the first use state and corresponding to the current time and changing the orientation of a display displayed on the display portion in response to the lateral orientation or the vertical orientation in a case where it is detected that the portable information display terminal is in the first use state. When forming the portable information display terminal in this manner, the control portion can start the application program suitable to The use situation where the user manually grasps the housing and the current time by starting the application program corresponding to the first use state and corresponding to the current time, and can display information on the display portion with orientations of display suitable to respective ones in a case where the user grasps the housing in the vertically oriented use state and a case where the user grasps the housing in the laterally oriented use state.

Preferably in the portable information display terminal according to the aforementioned aspect, the use state includes a second use state where the user uses the portable information display terminal while standing the housing and a display portion on a placing surface and a third use state where the user uses the portable information display terminal while laying down the housing and the display portion on the placing surface, and the control portion is formed to perform control of starting an application program not premised to be operated by the user in a case where the portable information display terminal is in the second state where the user uses the portable information display terminal while standing the housing and the display portion on the placing surface and starting an application program premised to be operated by the user in a case where the portable information display terminal is in the third use state where the user uses the portable information display terminal while laying down the housing and the display portion on the placing surface. When forming the portable information display terminal in this manner, the control portion can start an application program coinciding with the second state by starting the application program not premised to be operated by the user in a case of the second use state, which is a use state not suitable to be operated by the user, where the user uses the portable information display terminal while standing the housing on the placing surface. In a case of the third use state, which is a use state where the user can easily operate the portable information display terminal, where the user uses the portable information display terminal while laying down the housing on the placing surface, the control portion can start an application program coinciding with the third use state by starting the application program premised to be operated by the user. As a result of these, the control portion can start an application program suitable to each use state in response to the presence or absence of the promise to be operated by the user in the same placing state.

Preferably in the portable information display terminal according to the aforementioned aspect, the use state includes a second use state where the user uses the portable information display terminal while standing the housing on a placing surface and a third use state where the user uses the portable information display terminal while laying down the housing on the placing surface, the use state detection means is formed to acquire inclinations of the housing in the second use state where the user uses the portable information display terminal while standing the housing on the placing surface and the third use state where the user uses the portable information display terminal while laying down the housing on the placing surface, and the control portion is formed to be capable of determining and specifying the second use state and the third state on the basis of the inclinations of the housing in the second use state and the third use state acquired by the use state detection means. When forming the portable information display terminal in this manner, the use state detection means can easily detect the second use state and the third use state.

Preferably in this case, the housing has such an outer shape that the housing is placeable with different inclinations in the second use state where the user uses the portable information display terminal while standing the housing on the placing surface and the third use state where the user uses the portable information display terminal while laying down the housing on the placing surface, and the control portion is formed to be capable of determining and specifying the second use state and the third use state on the basis of the different inclinations of the housing in the second use state and the third use state based on the outer shape of the housing acquired by the use state detection means. When forming the portable information display terminal in this manner, the portable information display terminal can be brought into the second use state standing the housing and the third use state laying down the housing due to the outer shape of the housing without an auxiliary tool such as a stand, and the control portion can easily determine and detect the second use state and the third use state due to difference between the inclinations based on the outer shape.

Preferably in the portable information display terminal according to the aforementioned aspect, the use state includes a first use state where the user uses the portable information display terminal while manually grasping the housing, a second use state where the user uses the portable information display terminal while standing the housing on a placing surface and a third use state where the user uses the portable information display terminal while laying down the housing on the placing surface, the use state detection means includes an inclination sensor, and the control portion is formed to determine and specify the second use state and the third use state on the basis of an inclination angle detected by the inclination sensor, and to determine and specify the first use state on the basis of a change state of the inclination angle detected by the inclination sensor. When forming the portable information display terminal in this manner, the control portion can easily determine and specify the second use state and the third use state on the basis of an absolute inclination angle with the inclination sensor and can determine and specify the first use state on the basis of the change state of the inclination value, whereby the same can easily determine and specify the three states of the first state, the second state and the third state.

Preferably, the portable information display terminal according to the aforementioned aspect is so formed that the user is capable of setting validation or invalidation of a function of starting the application program corresponding to the detected use state and the current time, and the control portion is formed to start the application program corresponding to the detected use state and the current time in a case where the function of starting the application program corresponding to the use state and the current time is valid. When forming the portable information display terminal in this manner, the control portion can start the application program correspondingly to the use state and the current time only in a case where the function of starting the application program is validly set, while the application program is not automatically started but the user can manually select and start an arbitrary application program in response to the current situation in a case where the function of starting the application program is invalidly set.

Preferably in this case, the control portion is formed not to terminate but to maintain an application program having been started correspondingly to the use state detected by the use state detection means and the current time detected by the time detection means in a state before the use state is changed in a case where the function of starting the application program corresponding to the use state and the current time is invalid, also in a case where the portable information display terminal is switched from the state before the use state is changed to a state after the use state is changed. When forming the portable information display terminal in this manner, the application is continued even if the use state is changed also in a case where the function of starting the application program corresponding to the use state and the current time is invalidly set, whereby the application remains so uninterrupted that the user can easily perform an operation. Further, the application program not corresponding to the changed use is continued, whereby the user can easily recognize that it is necessary to switch the portable information display terminal to an application program suitable to the changed use state.

Preferably, the portable information display terminal According to the aforementioned aspect further includes a storage portion storing a use history of a used application program in the use state and a starting time zone, and the control portion is formed to perform control of deciding and starting an application program corresponding to the detected use state and the current time on the basis of the use history stored in the storage portion. When forming the portable information display terminal in this manner, the control portion can let an application program highly frequently used by the user, for example, be learned and start the same on the basis of a use history of application programs used by the user in the past, whereby the convenience for the user can be improved.

Preferably in this case, a history of an application program having been used for at least a prescribed time in a prescribed use state every starting time zone is included in the use history, and the control portion is formed to perform control of starting an application program having been used for at least the prescribed time in the starting time zone corresponding to the current time. When forming the portable information display terminal in this manner, the control portion can easily grasp the application program highly frequently used by the user, having been started in the past in the starting time zone corresponding to the current time, whereby the same can easily start the application program highly frequently used by the user in the starting time zone also after the use state is changed.

Preferably in the portable information display terminal according to the aforementioned aspect, the control portion is formed to be capable of starting the application program by preferentially determining a detection result of the time detection means over a detection result of the use state detection means, the control portion is formed to perform control of starting an application program corresponding to a prescribed time when the current time detected by the time detection means and the prescribed time set while granting priority to time setting coincide with each other regardless of the use state detected by the use state detection means in a prescribed case, and the application program started correspondingly to the prescribed time is different from an application program started correspondingly to the use state detected by the use state detection means and the current time detected by the time detection means. When forming the portable information display terminal in this manner, the application program corresponding to the prescribed time set while granting priority to time setting is preferentially started, whereby the user can reliably use an application program having a reason for specific use (starting).

Preferably in this case, the prescribed case includes a case where an application program started by preferentially determining the detection result of the time detection means over the detection result of the use state detection means has been set by the user. When forming the portable information display terminal in this manner, an intention of the user for starting a specific application with respect to the current time or the prescribed time can be reliably reflected on an operation of the portable information display terminal. Consequently, the convenience for the user can be more improved.

### Brief Description of the Drawings

[Fig. 1] An overall perspective view for illustrating the structure on a liquid crystal display portion side of a portable information display terminal according to a first embodiment of the present invention.
[Fig. 2] An overall perspective view for illustrating the structure on a surface side of the portable information display terminal according to the first embodiment shown in Fig. 1 opposite to a surface provided with a liquid crystal display portion.
[Fig. 3] A perspective view showing a state where the portable information display terminal is grasped while laterally orienting the longitudinal direction of the portable information display terminal according to the first embodiment shown in Fig. 1.
[Fig. 4] A perspective view showing a state where the portable information display terminal is grasped while vertically orienting the longitudinal direction of the portable information display terminal according to the first embodiment shown in Fig. 1.
[Fig. 5] A perspective view showing a state standing a frame and a liquid crystal display portion of the portable information display terminal according to the first embodiment shown in Fig. 1 on a placing surface.
[Fig. 6] A perspective view showing a state laying down the frame and the liquid crystal display portion of the portable information display terminal according to the first embodiment shown in Fig. 1 on the placing surface.
[Fig. 7] A block diagram for illustrating the internal structure of the portable information display terminal according to the first embodiment shown in Fig. 1.
[Fig. 8] A diagram showing appl ication programs corresponding to changed states of the portable information display terminal according to the first embodiment shown in Fig. 1 and time zones on weekdays.
[Fig. 9] A diagram showing application programs started while granting priority to time setting in the portable information display terminal according to the first embodiment shown in Fig. 1.
[Fig. 10] A diagram showing application programs corresponding to changed states of the portable information display terminal according to the first embodiment shown in Fig. 1 and time zones on holidays.
[Fig. 11] A flow chart for illustrating a starting and maintenance flow for an application program corresponding to a use state of the portable information display terminal according to the first embodiment shown in Fig. 1 and a time zone.
[Fig. 12] A flow chart for illustrating a set flow at a time when the application program started correspondingly to the use state of the portable information display terminal according to the first embodiment shown in Fig. 1 and the time zone is set.
[Fig. 13] A flow chart for illustrating a starting and maintenance flow for an application program started while granting priority to time setting in the portable information display terminal according to the first embodiment shown in Fig. 1.
[Fig. 14] A flow chart for illustrating a starting and maintenance flow for an application program corresponding to a use state of a portable information display terminal according to a second embodiment of the present invention and a time zone.
[Fig. 15] A flow chart for illustrating a learning flow for causing a storage portion to learn an application program first used for at least a constant time in each use state (a stood state, a laid-down state or a hand-held state) of the portable information display terminal according to the second embodiment of the present invention.
[Fig. 16] A flow chart for illustrating a starting and maintenance flow for an application program corresponding to a transition mode of use state of a portable information display terminal according to a third embodiment of the present invention and a time zone.

### Modes for Carrying Out the Invention

Embodiments embodying the present invention are now described on the basis of the drawings.

### (First Embodiment)

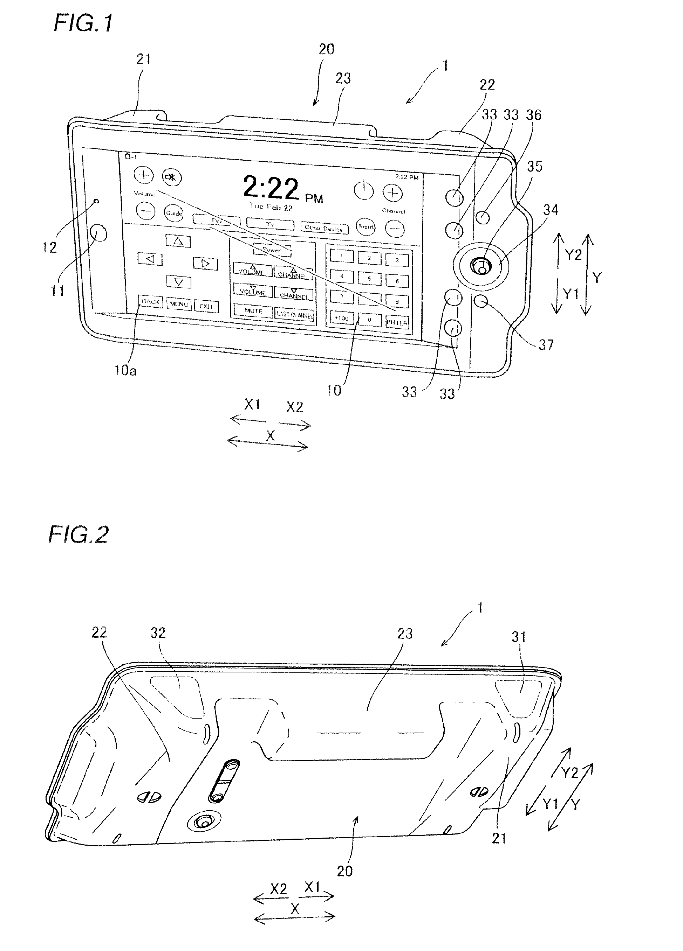

First, the structure of a portable information display terminal 1 according to a first embodiment of the present invention is described with reference to Figs. 1 to 10.

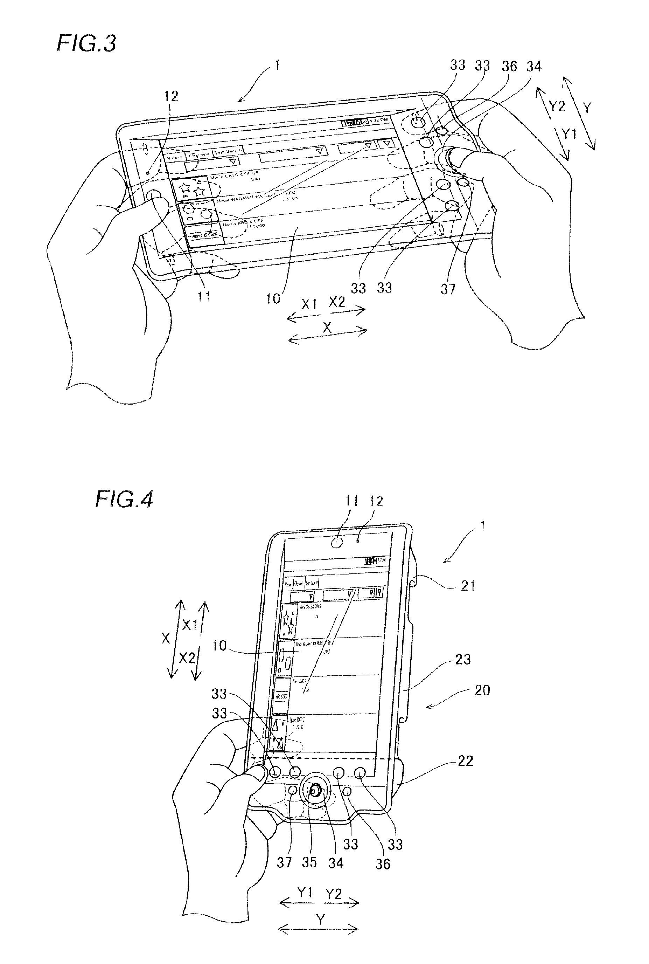

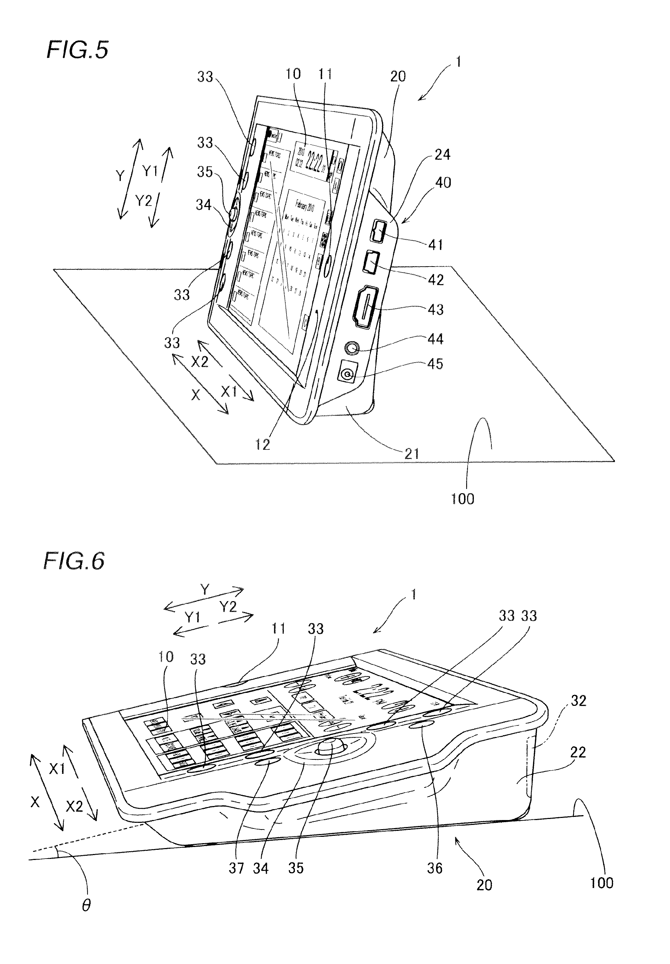

As shown in Figs. 1 and 2, the portable information display terminal 1 according to the first embodiment of the present invention is mainly constituted of a liquid crystal display portion 10 (see Fig. 1) displaying information and a frame 20 provided with the liquid crystal display portion 10 on a surface thereof. The liquid crystal display portion 10 is an example of the "display portion" in the present invention, and the frame 20 is an example of the "housing" in the present invention. This portable information display terminal 1 is formed to be usable in a state (see Figs. 3 and 4) grasped by the user, and formed to be usable also in a state (see fig. 5) standing the frame 20 and the liquid crystal display portion 10 on a placing surface 100 and a state (see Fig. 6) laying down the frame 20 and the liquid crystal display portion 10 on the placing surface 100. The state grasped by the user is an example of the "first use state" in the present invention, and the state standing the frame 20 and the liquid crystal display portion 10 on the placing surface 100 is an example of the "second use state" in the present invention. The state laying down the frame 20 and the liquid crystal display portion 10 on the placing surface 100 is an example of the "third use state" in the present invention.

This portable information display terminal 1 is formed to be Internet-connectable, and formed to be capable of using a function of receiving and playing back/outputting streaming distributions, an electronic mail function, a video chat function and a voice chat function by performing Internet connection. Further, the portable information display terminal 1 is formed to be usable as a remote control for a media player and a television set (not shown) etc. by shifting to a remote control mode also in a case where the same is not Internet-connected. The portable information display terminal 1 is capable of displaying a calender, a clock and the like according to small-scale application software (gadget) in the state (see Fig. 5) standing the frame 20 and the liquid crystal display portion 10.

The structures of the liquid crystal display portion 10 and the frame 20 of the portable information display terminal 1 are now described in detail. The liquid crystal display portion 10 has a touch panel function as shown in Fig. 1, and is so formed that the user presses down operation buttons 10a displayed on the liquid crystal display portion 10 to be capable of operations according to application programs. A camera unit 11 capable of picking up images is set on an arrow X1 direction side of the liquid crystal display portion 10. A microphone unit 12 is set in the vicinity of the camera unit 11. The camera unit 11 is an example of the "image pickup portion" in the present invention.

The frame 20 is made of resin. As shown in Figs. 1 and 2, a plurality of protrusions 21, 22 and 23 are integrally provided on a surface of the frame 20 opposite to the surface provided with the liquid crystal display portion 10. The protrusions 21 and 22 are provided in the vicinity of both end portions in the longitudinal direction (direction X) of the frame 20 to extend in the short-side direction (direction Y) of the frame 20. As shown in Fig. 6, the protrusions 21 (see Fig. 2) and 22 are so formed that thicknesses gradually increase from a first end side (arrow Y1 direction side) toward a second end side (arrow Y2 direction side) in the short-side direction (direction Y) of the frame 20 respectively. In other words, the protrusions 21 and 22 are formed to have wedge shapes tapering in a tapering manner from the second side (arrow Y2 direction side) toward the first side (arrow Y1 direction side) in the short-side direction of the frame 20 as viewed from the longitudinal direction (the arrow X1 direction and an arrow X2 direction) of the frame 20 respectively.

The protrusions 21 and 22 are so formed in the aforementioned manner that the user places the portable information display terminal 1 on the placing surface 100 while directing surfaces of the protrusion 21 and the protrusion 22 on the arrow Y2 direction side downward, whereby the protrusions 21 and 22 are capable of supporting the frame 20 in a state standing the frame 20 and the liquid crystal display portion 10, as shown in Fig. 5. Further, the protrusions 21 and 22 are capable of supporting the frame 20 in a state laying down the frame 20 and the liquid crystal display portion 10 while inclining the same by a prescribed angle θ with respect to the placing surface 100, as shown in Fig. 6.

In addition, the protrusions 21 and 22 are so formed in the aforementioned manner that the user can grasp the protrusions 21 and 22 with both hands while laterally orienting the longitudinal direction (direction X) of the frame 20 and the liquid crystal display portion 10 as viewed from the user, as shown in Fig. 3. As shown in Fig. 4, the protrusion 22 is graspable with one hand (left hand) while vertically orienting the longitudinal direction (direction X) of the frame 20 and the liquid crystal display portion 10.

The protrusion 23 is provided in the vicinity of a second end portion (arrow Y2 direction end portion) in the short-side direction (direction Y) of the frame 20 between the protrusions 21 and 22, as shown in Fig. 2. A secondary cell (lithium ion cell) for supplying power to the portable information display terminal 1 is built (stored) in this protrusion 23.

Infrared communication portions 31 and 32 are built in end surfaces on second end portion sides (arrow Y2 direction sides) of the protrusions 21 and 22 respectively. The infrared communication portion 31 and 32 are formed to emit infrared rays including prescribed signals (remote control signals) capable of operating a media player and a television set (not shown) etc. in the remote control mode described later.

Various types of information processor mode switches 33 are provided on portions on an arrow X2 direction side in the longitudinal direction (direction X) of the liquid crystal display portion 10, as shown in Fig. 1. The various types of information processor mode switches 33 are switches used in an information processor mode processing an electronic mail, video and voice chats and the like respectively. A four-directional movable switch 34 (selection switch) is provided in the vicinity of the various types of information processor mode switches 33 on the arrow X2 direction side. A decision switch 35 is provided on a central portion of the four-directional movable switch 34. The four-directional movable switch 34 and the decision switch 35 are formed to be usable in both of the remote control mode and the information processor mode respectively.

A remote control mode transition switch 36 capable of switching the remote control mode and the information processor mode is provided on the arrow Y2 direction side of the four-directional movable switch 34. A return function switch 37 for returning an operation screen OSD-displayed on a display portion of a remote control operation object apparatus (television or the like) in the remote control mode from the current state to an immediately precedent state is provided on the arrow Y1 direction side of the four-directional movable switch 34. As shown in Fig. 2, a power supply switch 38 is provided on the back surface of the frame 20. This power supply switch 38 has a function of starting the portable information display terminal 1 to an ON-state by being pressed down in a case where the portable information display terminal 1 is in an OFF-state, and returning The portable information display terminal 1 from a standby mode in a case where the portable information display terminal 1 is in the standby mode.

As shown in Fig. 5, a plurality of connection portions 40 are provided on a side surface portion 24 of the frame 20 on the arrow X1 direction side. These connection portions 40 include two USB connection portions 41 and 42, an HDMI connection portion 43, a voice cable connection portion 44 and a power supply connector 45.

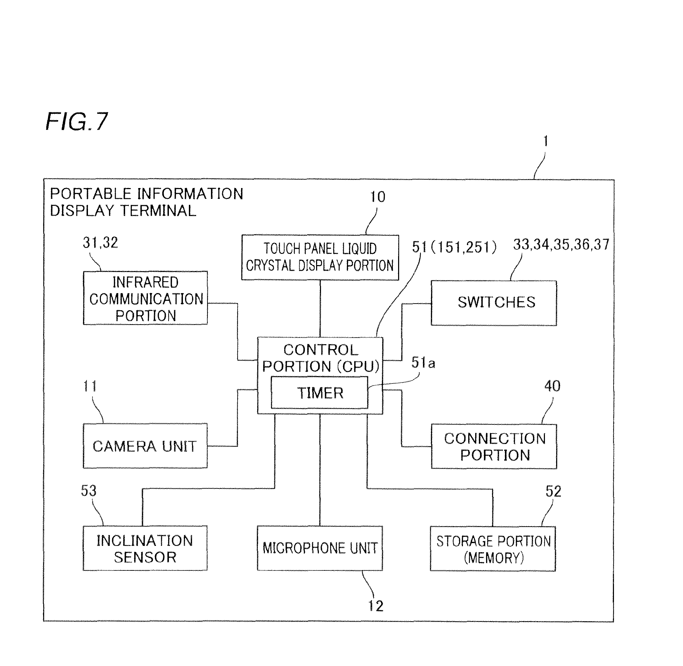

The internal structure of the portable information display terminal 1 is now described. The frame 20 of the portable information display terminal 1 is provided with a control portion (CPU) 51 including a timer 51a detecting a time and managing control of the portable information display terminal 1, a storage portion (memory) 52 and an inclination sensor 53, as shown in Fig. 7. The timer 51a is an example of the "time detection means" in the present invention, and the inclination sensor 53 is an example of the "use state detection means" in the present invention.

The storage portion 52 stores application programs run by the control portion 51. Further, the storage portion 52 stores a use history of application programs used in a state (hereinafter referred to as a hand-held state (see Figs. 3 and 4)) where the user uses the portable information display terminal 1 while grasping the portable information display terminal 1 with his/her hand, a state (hereinafter referred to as a stood state (see Fig. 5) where the user uses the portable information display terminal 1 while standing the frame 20 and the liquid crystal display portion 10 on the placing surface 100 and a state (hereinafter referred to as a laid-down state (see Fig. 6)) where the user uses the portable information display terminal 1 while laying down the frame 20 and the liquid crystal display portion 10 on the placing surface 100. In this use history, history information of an application program having been used for at least a constant time in each use state every starting time zone is also included, in addition to the use states (the hand-held state, the stood state and the laid-down state) of the frame 20.

According to the first embodiment, the inclination sensor 53 has a function of acquiring an inclination of the frame 20 (see Fig. 1). The inclination sensor 53 is provided for detecting which use state the portable information display terminal 1 is in, i.e. in the stood state (see Fig. 5), in the laid-down state (see Fig. 6) or in the hand-held state (see Figs. 3 and 4).

Due to the aforementioned outer shape of the frame 20, angles of the frame 20 with respect to the placing surface 10 are different from each other by at least 90 degrees between the inclination in the stood state (see Fig. 5) and the inclination in the laid-down state (see Fig. 6), whereby the control portion 51 is capable of easily determining and specifying the respective states on the basis of the different inclinations of the frame 20 with respect to the placing surface 100.

In the hand-held state (see Figs. 3 and 4), a detection value detected by the inclination sensor 53 changes every detection time due to the fact that the user finely moves, and hence the control portion 51 is enabled to distinguish the stood state, the laid-down state and the hand-held state from each other. Further, the inclination sensor 53 is formed to be capable of detecting a vertically oriented use state (hereinafter referred to as a vertically held state (see Fig. 4)) where the user uses the portable information display terminal 1 while vertically orienting the longitudinal direction of the frame 20 and a laterally oriented use state (hereinafter referred to a laterally held state (see Fig. 3)) where the user uses the portable information display terminal 1 while laterally orienting the longitudinal direction of the frame 20 also in a case where the portable information display terminal 1 is in the hand-held state (see Figs. 3 and 4). In the vertically held state and the laterally held state, the liquid crystal display portion 10 is rotated by about 90 degrees as shown in Figs. 3 and 4, whereby the inclination sensor 53 is capable of easily determining and specifying different inclinations in the vertically held state and the laterally held state.

According to the first embodiment, the control portion 51 is formed to determine and specify use states of the frame 20 and the liquid crystal display portion 10 on the basis of the inclination acquired by the inclination sensor 53. More specifically, the control portion 51 is formed to determine and specify which one of the stood state (see Fig. 5), the laid-down state (see Fig. 6) and the hand-held state (see Figs. 3 and 4) the portable information display terminal 1 is. Further, the control portion 51 is formed to detect the current time zone (current time) when the use state (inclination value by the inclination sensor 53) is changed. In addition, the control portion 51 is formed to automatically start an application program corresponding to the use state detected by the inclination sensor 53 and the current time zone detected by the timer 51a.

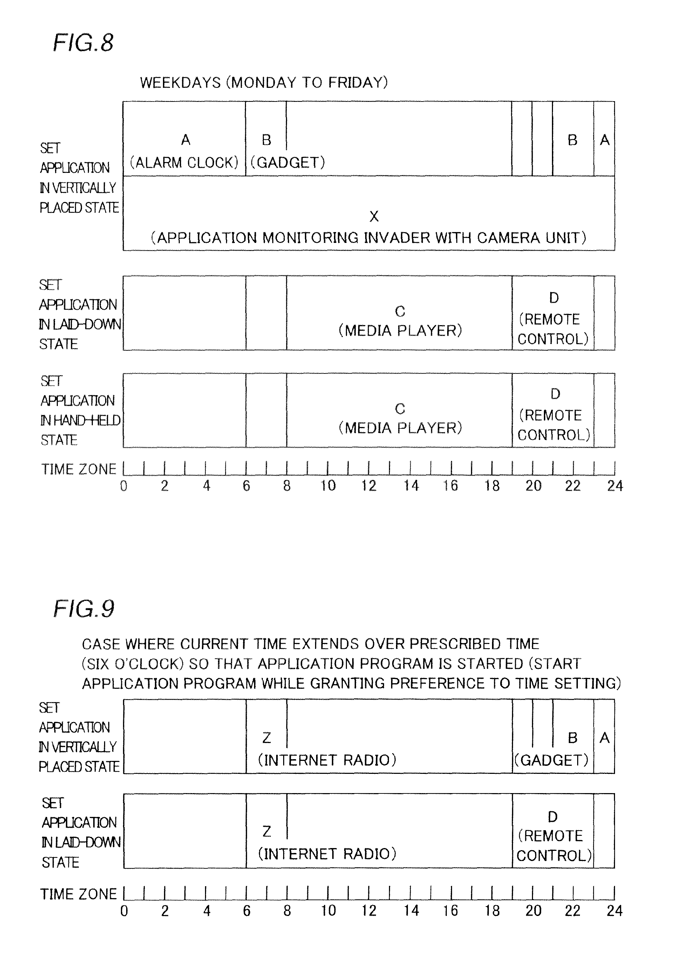

According to the first embodiment, the control portion 51 is formed to be capable of starting an application program A for an alarm clock in a case of determining and specifying that the portable information display terminal 1 has been changed to the stood state (see Fig. 5) in a time zones between 23 o'clock and six o'clock as shown in Fig. 8, for example. Further, the control portion 51 is formed to be capable of starting a gadget (application program B) capable of displaying news, a clock etc. on the liquid crystal display portion 10 in a case of determining and specifying that the portable information display terminal 1 has been changed to the stood state (see Fig. 5) in a time zone between six o'clock and eight o'clock, for example. Thus, the control portion 51 is formed to start the application programs A and B not premised to be operated by the user in cases of specifying that the portable information display terminal 1 is in the stood state (see Fig. 5).

Further, the control portion 51 is formed to be capable of simultaneously parallelly starting an application program (application program A or B, for example) using the liquid crystal display portion 10 and an application program X not using the liquid crystal display portion 10 when starting application programs in response to the use state and the current time zone (current time) in the case of the stood state. The application program X not using the liquid crystal display portion 10 is an application program monitoring an or the like with the camera unit 11 or an application program such as an Internet radio transmitting information consisting of sounds to the user, for example.

According to the first embodiment, the control portion 51 is so formed that an application program C for a media player is started in a case of determining and specifying that the portable information display terminal 1 has been changed to the hand-held state (see Figs. 3 and 4) or the laid-down state (see Fig. 6) in a time zone between eight o'clock and 19 o'clock, for example. Further, the control portion 51 is so formed that an application program D for a remote control corresponding to the remote control mode is started in a case of determining and specifying that the portable information display terminal 1 has been changed to the hand-held state (see Figs. 3 and 4) or the laid-down state (see Fig. 6) in a time zone between 19 o'clock and 23 o'clock, for example. Thus, the control portion 51 is formed to start the application program C or D premised to be operated by the user in the case of specifying that the portable information display terminal 1 is in the hand-held state (see Figs. 3 and 4) or the laid-down state (see Fig. 6).

The control portion 51 is formed to be capable of performing control so that an application program is started at a prescribed time regardless of the detected use state when starting the application program at the prescribed time while granting priority to time setting regardless of the use state. For example, the control portion 51 is formed to start an application program Z for an Internet radio whichever use state (the stood state, the laid-down state or the hand-held state) the frame 20 is in, in a case of determining that it is six o'clock on the basis of the timer 51a, as shown in Fig. 9.

According to the first embodiment, the portable information display terminal 1 is so formed that the user is capable of setting a started application program in response to the use state (the stood state, the laid-down state where the user uses the portable information display terminal 1 and the hand-held state) and the current time zone. Further, the portable information display portion 1 is so formed that the user can previously set an operation of starting an application program at a prescribed time while granting priority to time setting regardless of the use state. In addition, the portable information display terminal 1 is formed to be capable of invalidating a function (automatic starting mode) for automatically starting the application program corresponding to the use state and the current time zone. In other words, the portable information display terminal 1 is so formed that the user can set validation or invalidation of the function of starting the application program corresponding to the use state (the stood state, the laid-down state where the user uses the portable information display terminal 1 or the hand-held state) determined on the basis of the inclination and the current time zone.

The portable information display terminal 1 is so formed that setting of the starting time zone at the time of simultaneously parallelly starting the application program (application program A or B, for example) using the aforementioned liquid crystal display portion 10 and the application program (application program X, for example) not using the liquid crystal display portion 10 can be independently performed for the application program using the liquid crystal display portion 10 and for the application program not using the liquid crystal display portion 10.

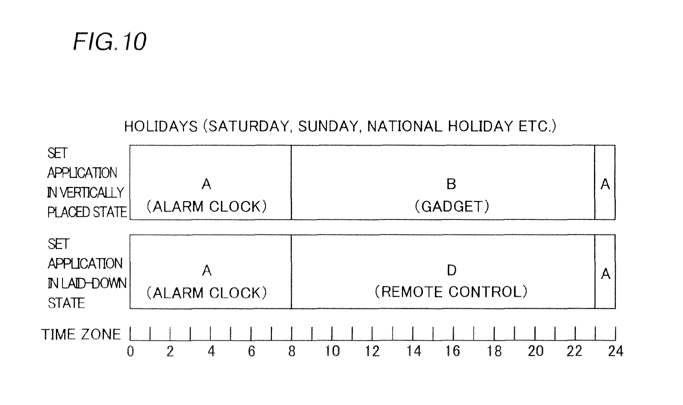

The portable information display terminal 1 is so formed that, as to setting of the starting time zone for starting the application program corresponding to the aforementioned current time zone, setting is possible in any of setting of the starting time zone every day of the week, setting of the starting time zone distinguishing weekdays and holidays from each other and setting of the starting time zone without distinction of the day of the week and the holidays, as shown in Fig. 10.

A starting and maintenance flow for an application program corresponding the use state of the portable information display terminal 1 according to the first embodiment is now described with reference to Figs. 3 to 7 and 11.

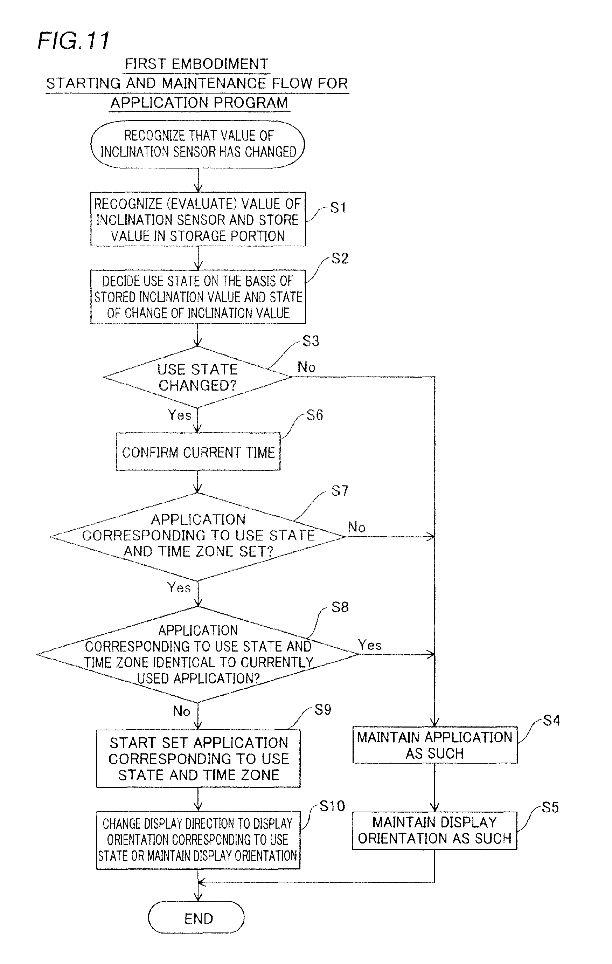

As shown in Fig. 11, the control portion 51 (see Fig. 7) recognizes that the inclination value acquired by the inclination sensor 53 has changed (event occurrence), whereby the starting flow for the application program corresponding to the use state of the portable information display terminal 1 is started. First, the inclination value acquired from the inclination sensor 53 is recognize (evaluated) by the control portion 51, and the Inclination value is stored in the storage portion 52 at a step S1. At a step S2, which state of the stood state (see Fig. 5), the laid-down state (see Fig. 6) and the hand-held state (see Figs. 3 and 4) the portable information display terminal 1 is in is determined on the basis of the inclination value stored this time and states of change of a stored past inclination value and the inclination value stored this time. In other words, the portable information display terminal 1 is decided to be in the hand-held state in a case where the stored past inclination value and the inclination value stored this time change piecemeal. Further, the portable information display terminal 1 is decided to be in the stood state in a case where the stored past inclination value and the inclination value stored this time do not change piecemeal but the inclination value stored this time is in the range of the inclination value in the stood state, while the portable information display terminal 1 is decided to be in the laid-down state in a case where the inclination value stored this time is in the range of the inclination value in the laid-down state.

Thereafter whether or not the decided state has been changed from a state (before event occurrence) before the inclination value acquired by the inclination sensor 53 changes is determined by the control portion 51 at a step S3. In a case where it is determined at the step S3 that the decided state has not been changed from the state (before event occurrence) before the inclination value acquired by the inclination sensor 53 changes, the control portion 51 advances to a step S4. The state has not been changed and hence the application program is not changed but the application program is maintained as such at the step S4, and the control portion 51 advances to a step S5. The orientation of the display displayed on the liquid crystal display portion 10 is not changed either but maintained as such at the step S5. Then, the aforementioned series of starting and maintenance flow for the application program terminates.

In a case where it is determined at the step S3 that the decided state has been changed from the state (before event occurrence) before the inclination value acquired by the inclination sensor 53 changes, the control portion 51 advances to a step S6. The current time is confirmed by the control portion 51 at the step S6, and the control portion 51 advances to a step S7.

At the step S7, whether or not an application program corresponding to the current time and the changed use state is set is determined by the control portion 51. In a case where it is determined that the application program corresponding to the current time and the changed use state is not set at the step S7, the control portion 51 advances to the step S4 and the step S5 in this order, and the starting and maintenance flow for the application program terminates. In other words, such a state that an application program having been started correspondingly to the use state detected by the inclination sensor 53 and the current time detected by the timer 51 in the state before the use state is changed is not terminated but run is maintained at the step S4, even if the use state of the portable information display terminal 1 is changed. In a case where it is determined that the application program corresponding to the current time and the changed use state is set at the step S7, the control portion 51 advances to a step S8.

At the step S8, whether or not the application program, having been set, corresponding to the changed use state and the current time zone is the same application program as the currently used application program is determined by the control portion 51. In a case where it is determined at the step S8 that the application program having been set is the same application program as the currently used application program, the application program may not be changed and hence the control portion 51 advances to the step S4 and the step S5 in this order, and the starting and maintenance flow for the application program terminates. In a case where it is determined at the step S8 that the application program having been set is not the same application program as the currently used application program, the control portion 51 advances to a step S9.

Thereafter at the step S9, an application program corresponding to the changed use state set by the user and the current time zone is started. In other words, the application program having been run before the change is terminated, while the application program, set by the user, corresponding to the changed state is started. As specific examples, the application program having been run before the change is terminated while an application program such as a gadget (application displaying a clock, a calender and news etc.) not premised to be operated by the user is started in a case where the portable information display terminal 1 is changed to the stood state (see Fig. 5), and the application program having been run before the change is terminated while an application program for a media player application or a remote control application premised to be operated by the user is started in a case where the portable information display terminal 1 is changed to the laid-down state (see Fig. 6). In a case where the portable information display terminal 1 is changed to the hand-held state (see Figs. 3 and 4), further, an application program for an application capable of playing back a streaming video or the like is started.

At a step S10, the display direction is changed to a display orientation corresponding to the state or the display orientation is maintained, and the aforementioned starting and maintenance flow for the application program terminates. More specifically, the orientation of the display displayed on the liquid crystal display portion 10 is rotated by 180 degrees in a case where the state is changed between the stood state and the laid-down state or the laterally held state of the hand-held state, for example. In a case where the state is changed between the vertically held state in the hand-held state and the stood state, the laid-down state or the laterally held state of the hand-held state, the orientation of the display displayed on the liquid crystal display portion 10 is rotated by 90 degrees or 270 degrees. In a case where the state is changed between the laterally held state in the hand-held state and the laid-down state, the orientation of the display displayed on the liquid crystal display portion 10 is not changed but maintained as such.

A set flow at a time when an application program to be automatically started correspondingly to a changed use state is set by the user at a time when the use state of the portable information display terminal 1 according to the first embodiment is changed is now described with reference to Figs. 3 to 7 and 12.

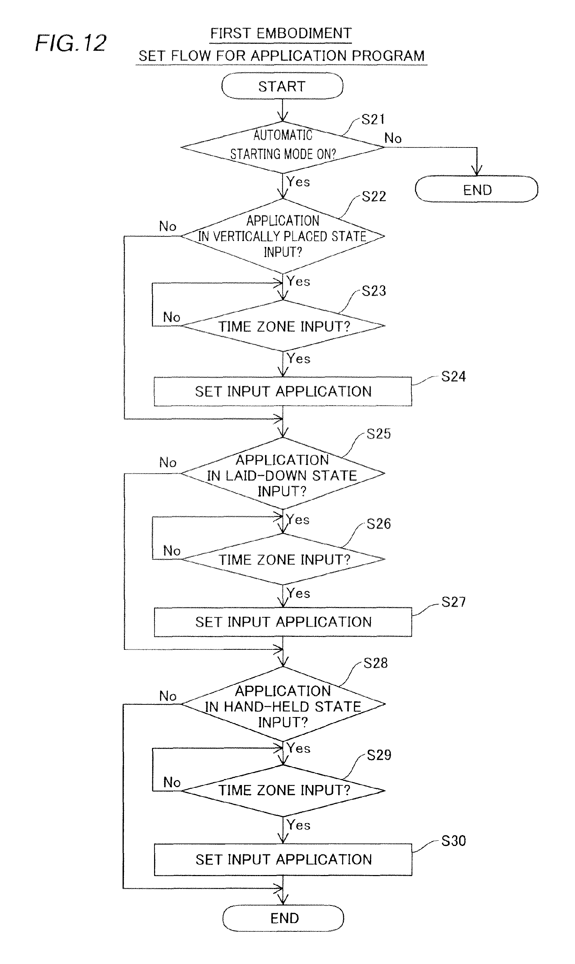

First, whether or not the automatic starting mode for automatically starting the application program corresponding to the changed use state when the use state is changed has been selected by the user is determined by the control portion 51 (see Fig. 7) at a step S21, as shown in Fig. 12. In other words, whether the automatic starting mode has been validated or invalidated is determined. In a case where it is determined at the step S21 that the automatic starting mode for starting the application program corresponding to the use state has been turned off (invalidated), setting of the application program is not performed but the set flow for the application program terminates. In a case where it is determined at the step S21 that the automatic starting mode for starting the application program corresponding to the use state has been turned on (invalidated), the control portion 51 advances to a step S22.

At the step S22, whether or not an application program automatically started in the state (stood state (see Fig. 5)) where the user uses the portable information display terminal 1 while standing the frame 20 and the liquid crystal display portion 10 on the placing surface 100 has been input by the user is determined by the control portion 51. In a case where it is determined at the step S22 that the application program automatically started in the stood state (see Fig. 5) has been input by the user, the control portion 51 advances to a step S23.

At the step S23, whether or not the time zone for starting the application program input at the step S22 has been input by the user is determined by the control portion 51. The control portion 51 advances to a step S24 in a case where it is determined at the step S23 that the time zone for starting the input application program has been input, the application program and the time zone input by the user are set by being written in the storage portion (memory) 52 at the step S24, and the control portion 51 advances to a step S25. At the step S23, this determination is repeated until the time zone for starting the input application program is input.

In a case where it is determined at the step S22 that the application program automatically started in the stood state (see Fig. 5) has not been input by the user, the control portion 51 advances to the step S25.

Thereafter at the step S25, whether or not an application program automatically started in the state (laid-down state (see Fig. 6)) where the user uses the portable information display terminal 1 while laying down the frame 20 and the liquid crystal display portion 10 on the placing surface 100 has been input by the user is determined by the control portion 51. In a case where it is determined at the step S25 that the application program automatically started in the laid-down state (see Fig. 6) has been input by the user, the control portion 51 advances to a step S26.

At the step S26, whether or not the time zone for starting the application program input at the step S25 has been input by the user is determined by the control portion 51. The control portion 51 advances to a step S27 in a case where it is determined at the step S26 that the time zone for starting the input application program has been input, the application program and the time zone input by the user are set by being written in the storage portion (memory) 52 at the step S27, and the control portion 51 advances to a step S28. At the step S26, this determination is repeated until the time zone for starting the input application program is input.

In a case where it is determined at the step S26 that the application program automatically started in the laid-down state (see Fig. 6) has not been input by the user, the control portion 51 advances to a step S28.

At the step S28, whether or not an application program automatically started in the state (hand-held state (see Figs. 3 and 4)) where the frame 20 is grasped by the user has been input by the user is determined by the control portion 51. In a case where it is determined at the step S28 that the application program automatically started in the hand-held state (see Figs. 3 and 4) has been input by the user, the control portion 51 advances to a step S29.

At the step S29, whether or not the time zone for starting the application program input at the step S28 has been input by the user is determined by the control portion 51. The control portion 51 advances to a step S30 in a case where it is determined at the step S29 that the time zone for starting the input application program has been input, the application program and the time zone input by the user are set by being written in the storage portion (memory) 52 at the step S30, and the set flow for the application program terminates. At the step S29, this determination is repeated until the time zone for starting the input application program is input.

In a case where it is determined at the step S28 that the application program automatically started in the hand-held state (see Figs. 3 and 4) has not been input by the user, setting of the application program is not performed but the set flow for the application program terminates.

A starting and maintenance flow for an application program in a case of granting priority to time setting in the portable information display terminal 1 according to the first embodiment is now described with reference to Figs. 7, 9 and 13.

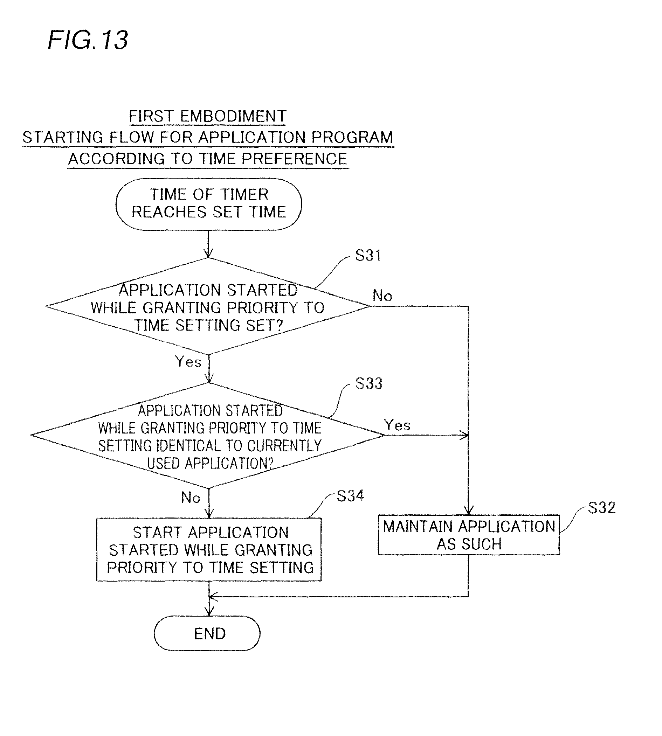

As shown in Fig. 13, the control portion 51 recognizes that (event occurrence) the timer 51a of the control portion 51 (see Fig. 7) has reached a time previously set by the user, whereby the setting and maintenance flow for the application program granting priority to time setting is started. At a step S31, whether or not the application program while granting priority to time setting is set is determined by the control portion 51. In a case where it is determined at the step S31 that the application program started while granting priority to time setting is not set, the control portion 51 advances to a step S32. At the step S32, no change of the state has been performed and hence the application program is not changed but the application program is maintained as such, and the starting and maintenance flow for the application program terminates. In a case where it is determined at the step S31 that the application program started while granting priority to time setting is set, the control portion 51 advances to a step S33.

At the step S33, whether or not the application program, having been set, started while granting priority to time setting is the same application program as a currently used application program is determined by the control portion 51. In a case where it is determined at the step S33 that the application program having been set is the same application program as the currently used application program, the application program may not be changed and hence the control portion 51 advances to the step S32, and the starting and maintenance flow for the application program terminates. In a case where it is determined at the step S33 that the application program having been set is not the same application program as the currently used application program, the control portion 51 advances to a step S34.

Thereafter at the step S34, the application program, set by the user, started while granting priority to time setting is started. For example, the application program Z for the Internet radio is started in a case where it is six o'clock, as shown in Fig. 9. Thereafter the starting and maintenance flow for the application program terminates.

According to the first embodiment, as hereinabove described, the control portion 51 starts the application program corresponding to the use state detected by the inclination sensor 53 and the current time zone (current time) detected by the timer 51a, whereby the same can automatically start a proper application program not only corresponding to the current time detected by the timer 51a but also corresponding to the use state detected by the inclination sensor 53, dissimilarly to a case where the application program is started on the basis of only detection of the current time zone by the timer 51a.

According to the first embodiment, as hereinabove described, the portable information display terminal 1 is so formed that the user is capable of setting the application program in response to the use state and the current time zone (current time) so that the control portion 51 can automatically start the application program set by the user in a case where the user changes the use state at a certain current time zone, whereby the same can start the application program coinciding with the use mode of the user in the use state and the current time zone.

According to the first embodiment, as hereinabove described, setting of the starting time zone for starting the application program corresponding to the current time zone (current time) is so formed that setting of any of setting of the starting time every day of the week, setting of the starting time zone distinguishing weekdays and holidays from each other and setting of the starting time zone without distinction of the day of the week and the holidays so that setting of the starting time zone can be detailedly performed, whereby the control portion 51 can start an application program further coinciding with the use mode (use time and the use state) of the user.

According to the first embodiment, as hereinabove described, the control portion 51 is formed to be capable of simultaneously parallelly starting the application program (A or B) using the liquid crystal display portion 10 and the application program X not using the liquid crystal display portion 10 when starting the application programs in response to the use state and the current time zone (current time), whereby the user can simultaneously use both application programs of the application program (A or B) using the liquid crystal display portion 10 and the application program X not using the liquid crystal display portion 10. Thus, the convenience for the user can be improved.

According to the first embodiment, as hereinabove described, the control portion 51 is formed to simultaneously start the application program (A or B) using the liquid crystal display portion 10 and the application program X not using the liquid crystal display portion 10 in the case where the use state detected by the inclination sensor 53 is the state (see Fig. 5) where the user stands the frame 20 on the placing surface 100. Thus, in the state (see Fig. 5) where the user stands the frame 20, it is conceivable that a possibility for such a case that the user watches, listens to and receives information transmitted from the portable information display terminal 1 stood on the placing surface, 100 is higher than that for a case where the user positively performs an operation on the portable information display terminal 1. In such a situation, the control portion 51 is capable of simultaneously parallelly starting the application program (A or B) using the liquid crystal display portion 10 and the application program X not using the liquid crystal display portion 10, whereby the portable information display terminal 1 can be more effectively practically used.

According to the first embodiment, as hereinabove described, setting of the starting time zone at the time of simultaneously parallelly starting the application program using the liquid crystal display portion 10 and the application program not using the liquid crystal display portion 10 is formed to be independently performable for the application program using the liquid crystal display portion 10 and the application program not using the liquid crystal display portion 10 so that setting of the starting time zone can be detailedly performed separately for the application program using the liquid crystal display portion 10 and the application program not using the liquid crystal display portion 10, whereby the convenience for the user can be further improved.

According to the first embodiment, as hereinabove described, the application program X not using the liquid crystal display portion 10 is the application program monitoring an invader or the like with the camera unit 11 or the application program for the Internet radio so that such an application program is startable without using the liquid crystal display portion 10, whereby a specific function possessed by the portable information display terminal 1 can be more effectively practically used.

According to the first embodiment, an hereinabove described, the control portion 51 is formed to start the application program corresponding to the hand-held state and corresponding to the current state in the case where it is detected that the portable information display terminal 1 is in the hand-held state, whereby the same can start the application program suitable to the hand-held state and the current time by starting the application program corresponding to the hand-held state and corresponding to the current state.

According to the first embodiment, as hereinabove described, the control portion 51 is formed to start the application program corresponding to the hand-held state and corresponding to the current state and to change the orientation of the display displayed on the liquid crystal display portion 10 in response to the lateral orientation or the vertical orientation in the case where it is detected that the portable information display terminal 1 is in the hand-held state, whereby the same can start the application program suitable to the hand-held state and the current time by starting the application program corresponding to the hand-held state and corresponding to the current state and can display information on the liquid crystal display portion 10 with orientations of displays suitable to respective ones in a case where the user grasps the frame 20 in the vertically oriented use state and a case where the user grasps the frame 20 in the laterally orientated use state.

According to the first embodiment, as hereinabove described, the control portion 51 starts the application program (gadget or the like) not premised to be used by the user in the case of the stood state, which is a use state not suitable to be operated by the user, where the user uses the portable information display terminal 1 while standing the frame 20 on the placing surface, whereby the same can start the application program coinciding with the stood state. In the case of the laid-down state which is a use state where the user can easily operate the portable information display terminal 1, the control portion 51 can start the application program coinciding with the laid-down state by starting the application program premised to be operated by the user. As a result of these, the control portion 51 can start an application program suitable to each use state in response to the presence or absence of the premise to be operated in the same placing state.

According to the first embodiment, as hereinabove described, the control portion 51 is formed to be capable of determining and specifying the stood state and the laid-down state on the basis of the inclinations of the frame 20 in the stood state and the laid-down state acquired by the inclination sensor 53, whereby the same can easily detect the stood state and the laid-down state with the inclination sensor 53 on the basis of the inclination of the frame 20.

According to the first embodiment, as hereinabove described, the control portion 51 is formed to be capable of determining and specifying the stood state and the laid-down state on the basis of different inclinations of the frame 20 in the stood state and the laid-down state based on the outer shape of the frame 20 acquired by the inclination sensor 53, whereby the same can bring the frame 20 and the liquid crystal display portion 10 into the stood stood state and the laid-down state without an auxiliary tool such as a stand due to the outer shape of the frame 20, and can easily determine and detect the stood state and the laid-down state due to the difference between the inclinations based on the outer shape.

According to the first embodiment, as hereinabove described, the control portion 51 determines and specifies the stood state and the laid-down state on the basis of the inclination angle detected by the inclination sensor 53 and determines and specifies the hand-held state on the basis of the change state of the inclination angle detected by the inclination sensor 53 so that the same can easily determine and specify the stood state and the laid-down state on the basis of an absolute inclination angle and can detect and specify the hand-held state on the basis of the change state of the inclination value with the inclination sensor 53, whereby the control portion 51 can easily determine and specify the three states of the stood state, the laid-down state and the hand-held state.

According to the first embodiment, as hereinabove described, the portable information display terminal 1 is so formed that it is possible to set validation or invalidation of the function (automatic starting mode) for startling the application program corresponding to the detected use state by the user while the control portion 51 starts the application program corresponding to the detected use state in the case where the function of starting the application program corresponding to the use state is valid, whereby the control portion 51 can start the application program correspondingly to the use state only in the case where the function of starting the application program is validly set while the application program is not automatically started but the user can manually select and start an arbitrary application program in response to the current situation in the case where the function of starting the application program is invalidly set.

According to the first embodiment, as hereinabove described, the control portions 51 does not terminate but maintains the application program having been started in response to the use state detected by the inclination sensor 53 and the current time detected by the timer 51a in the state before the use state is changed also in the case where the portable information display terminal 1 is switched from the state before the use state is changed to the state after the use state is changed in the case where the automatic starting mode is invalid so that the application is continued even if the use state is changed also in the case where the automatic starting mode is invalidly set, whereby the application remains so uninterrupted that the user can easily perform an operation. Further, the application program not corresponding to the changed use state is continued, whereby the user can easily recognize that it is necessary to switch the portable information display terminal 1 to the application program suitable to the changed use state.

According to the first embodiments, as hereinabove described, control of starting the application program (application program Z for the Internet radio, for example) corresponding to the prescribed time is performed when the current time coincides with the current time detected by the timer 51a and the prescribed time set while granting priority to time setting regardless of the use state detected by the inclination sensor 53 in the prescribed case. In this case, the application program Z corresponding to the prescribed time is different from the application programs A, B, C and D each corresponding to the use state detected by the inclination sensor 53 and the current time detected by the timer 51a. Thus, the (application program Z corresponding to the prescribed time set while granting priority to time setting is preferentially started, whereby the application program (application program Z for the Internet radio) having a reason for specific use (starting) can be reliably started.

According to the first embodiment, as hereinabove described, the prescribed case is a case where the application program Z or the like started while preferentially determining a detection result of the timer 51a over a detection result of the inclination sensor 53 has been set by the user, whereby an intention of the user for starting a specific application with respect to the current time or the prescribed time can be reliably reflected on an operation of the portable information display terminal 1. Consequently, the convenience for the user can be more improved.

### (Second Embodiment)

A portable information display terminal according to a second embodiment of the present invention is now described with reference to Figs. 3 to 7. In this second embodiment, an example of deciding an automatically started application program on the basis of a use history stored every use state and every current time zone (current time) is described, dissimilarly to the aforementioned first embodiment capable of setting the automatically started application program correspondingly to the use state of the portable information display terminal 1 and the current time zone (current time).

According to the second embodiment, a control portion (CPU) 151 is formed to decide and start an application program corresponding to a use state and a current time zone (current time) on the basis of a use history stored in a storage portion 52, as shown in Fig. 7. For example, the control portion 151 is formed to cause the storage portions 52 to store (learn) an application program first used for at least a constant time in a laid-down state after the portable information display terminal is switched to the laid-down state (see Fig. 6) from another use state in a certain time zone. The control portion 151 is formed to start an (application program previously first used for at least the constant time in a case where the portable information display terminal is subsequently switched to the laid-down state from another use state.

For example, the control portion 151 is formed to cause the storage portion 52 to store (learn) an application program first used for at least the constant time in a stood state after the portable information display terminal is switched to the stood state (see Fig. 5) from another use state in a certain time zone. Further, the control portion 151 is formed to start an application program previously first used for at least the constant time in a case where the portable information display terminal is subsequently switched to the stood state from another use state. In addition, the control portion 151 is formed to cause the storage portion 52 to store (learn) an application program first used for at least the constant time in a hand-held state after the portable information display terminal is switched to the state (hand-held state (see Figs. 3 and 4)) where the user uses the portable information display terminal while manually grasping the same. Further, the control portion 151 is formed to start an application program previously first used for at least the constant time in a case where the portable information display terminal is subsequently switched to the hand-held state from another use state.

A starting and maintenance flow for an application program corresponding to a use state of the portable information display terminal according to the second embodiment is now described with reference to Figs. 3 to 7 and 14. In this flow of the second embodiment, a step S1 to a step S6 are similar to those in the starting and maintenance flow for the application program corresponding to the use state of the portable information display terminal 1 according to the aforementioned first embodiments. In the starting and maintenance flow for the application program corresponding to the use state of the portable information display terminal according to the second embodiment, processing different from the starting and maintenance flow for the (application program corresponding to the use state of the portable information display terminal 1 according to the first embodiment and the time zone is now described.

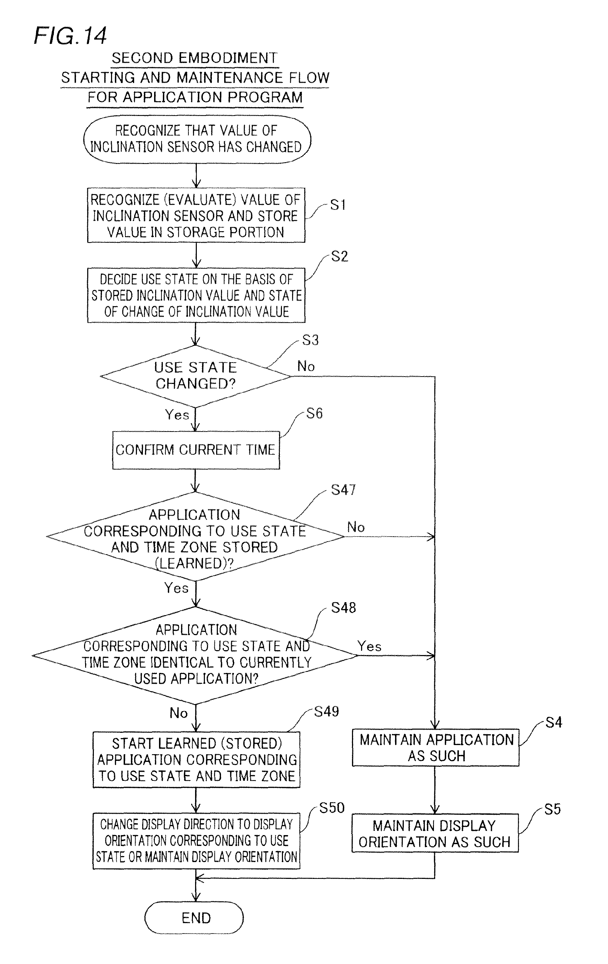

After a current time is confirmed at the step S6, whether or not an application program corresponding to a changed use state and a current time zone (time) is stored (learned) is determined by the control portion 151 at a step S47, as shown in Fig. 14. In other words, whether or not application programs automatically started as to respective ones of a stood state (see Fig. 5), a laid-down state (see Fig. 6) and a hand-held state (see Figs. 3 and 4) in the current time flow are stored (learned) by the user is determined at the step S47 in a storage (learning) flow for an application program described later. In a case where it is determined at the step S47 that the application program corresponding to the current time zone and the changed state is not stored (learned), the control portion 151 advances to the step S4 and the step S5 in this order, and the starting and maintenance flow for the application program terminates. In a case where it is determined at the step S47 that the application program corresponding to the current time zone and the changed state is stored (learned), the control portion 151 advances to a step S48.

At the step S48, whether or not the stored application program corresponding to the changed use state and the current time zone is the same application program as a currently used application program is determined by the control portion 151. In a case where it is determined at the step S48 that the application program having been stored is the same application program as the currently used application program, the application program may not be changed, and hence the control portion 151 advances to the step S4 and the step S5 in this order, and the starting and maintenance flow for the application program terminates. In a case where it is determined at the step S48 that the application program having been stored is not the same application program as the currently used application program, the control portion 151 advances to a step S49.

Thereafter at the step S49, the application program, stored in the storage portion 52, corresponding to the changed use state and the current time zone is started. Then, a display direction is changed to a display orientation corresponding to the state or the display orientation is maintained at a step S50, and the starting and maintenance flow for the application program terminates.

A learning flow for an application program causing the storage portion 52 to store an application program first used for at least a constant time in each use state (the stood state, the laid-down state or the hand-held state) of the portable information display terminal according to the second embodiment is now described with reference to Figs. 3 to 7 and 15.

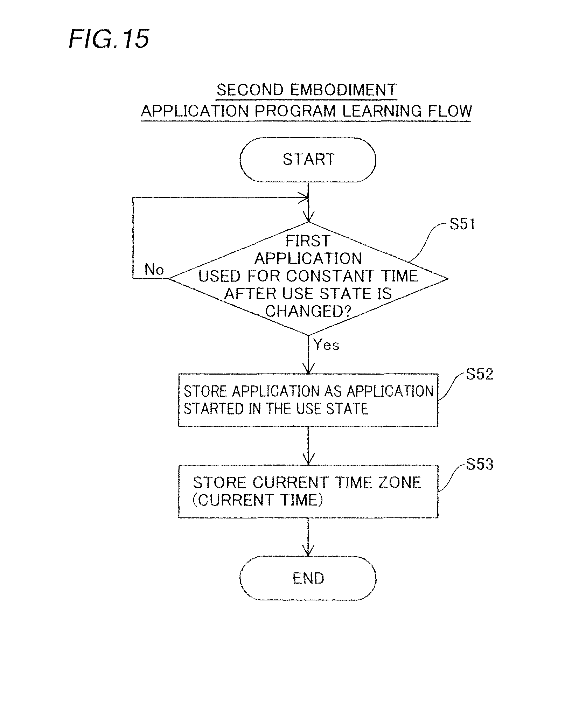

First, whether or not a currently used application program is a first application program used for at least the constant time after the use state is changed is determined by the control portion 151 (see Fig. 7) at a step S51, as shown in Fig. 15. In a case where it is determined at the step S51 that the currently used application program is not the first (application program used for at least the constant time after the use state is changed, the determination at the step S51 is repeated. In a case where it is determined at the step S51 that the currently used application program is the first application program used for at least the constant time after the use state is changed, the control portion 151 advances to a step S52.

At the step S52, the currently used application program is stored (learned) in the storage portion 52 by the control portion 151 as an application program to be started when the portable information display terminal is changed to the same state as the current state next time, and the control portion 151 advances to a step S53. Thereafter the current time zone is stored in the storage portion 52 at the step S53, and the learning flow causing the storage portion 52 to store the application program first used for at least the constant time in each use state (the stood state (see Fig. 5), the laid-down state (see Fig. 6) or the hand-held state (see Figs. 3 and 4)) of the portable information display terminal terminates.

According to the second embodiment, as hereinabove described, the control portion 151 decides and starts the application program corresponding to the use state and the current time zone on the basis of the use history stored in the storage portion 52 so that the same can cause the storage portion. 52 to learn an application program, first used for at least the constant time after the state is changed, highly frequently used by the user and start the same on the basis of the use history of application programs used by the user in the past, whereby convenience for the user can be improved.

According to the second embodiment, as hereinabove described, a history of an application program used for at least the prescribed time in a prescribed use state every starting time zone is included in the use history. The control portion 151 is formed to start an application program used for at least the prescribed time in a starting time zone corresponding to the current time. Thus, the control portion 151 can easily grasp an application program, started in the past, highly frequently used by the user in the starting time zone corresponding to the current time, whereby the same can easily start the application program highly frequently used in the starting time zone also after the use state is changed.

### (Third Embodiment)

A portable information display terminal according to a third embodiment of the present invention is now described with reference to Figs. 3 to 7. In this third embodiment, an example of automatically starting an application program correspondingly to transition of use state change of the portable information display terminal and a current time zone (current time) is described, dissimilarly to the aforementioned first and second embodiments automatically starting the application programs correspondingly to the use states of the portable information display terminals and the current time zones (current timers).

According to the third embodiment, a control portion 251 (see Fig. 7) is formed to determine and specify use states (see Figs. 3 to 6) of a frame 20 and a liquid crystal display portion 10 on the basis of a detection result by an inclination sensor 53. Further, the control portion 251 has a function of recognizing and deciding a transition mode of state change from a previously specified use state to a use state specified this time. In addition, the control portion 251 is formed to be capable of automatically starting an application program corresponding to the transition mode of the detected use state and a current time zone (current time). For example, the control portion 251 is formed to start a prescribed application program in a case of recognizing and deciding such a transition mode that the use state has been changed from a stood state (see Fig. 5) to a laid-down state (see Fig. 6) in a certain time zone. Further, the control portion 251 is formed to be capable of starting an application program different from the prescribed application program in a case of recognizing and deciding such a transition mode that the use state has been changed from a hand-held state (see Figs. 3 and 4) to the laid-down state (see Fig. 6) in the certain time zone, for example. In other words, the control portion 251 is formed to be capable of starting a different application program in a case where a state before being changed is different even if a state after being changed is the same state, since the transition mode of the state is different.

A starting and maintenance flow for an application program corresponding to a use state of the portable information display terminal according to the third embodiment is now described with reference to Figs. 3 to 7 and 16. In this flow of the third embodiment, a step S1 to a step S5 are similar to those in the starting and maintenance flows for the application programs corresponding to the use states of the portable information display terminals according to the aforementioned first and second embodiments and the current time zones. In the starting and maintenance flow for the application program corresponding to the use state of the portable information display terminal according to the third embodiment, processing different from the starting and maintenance flows for the application programs corresponding to the use states of the portable information display terminals according to the aforementioned first and second embodiments is now described.

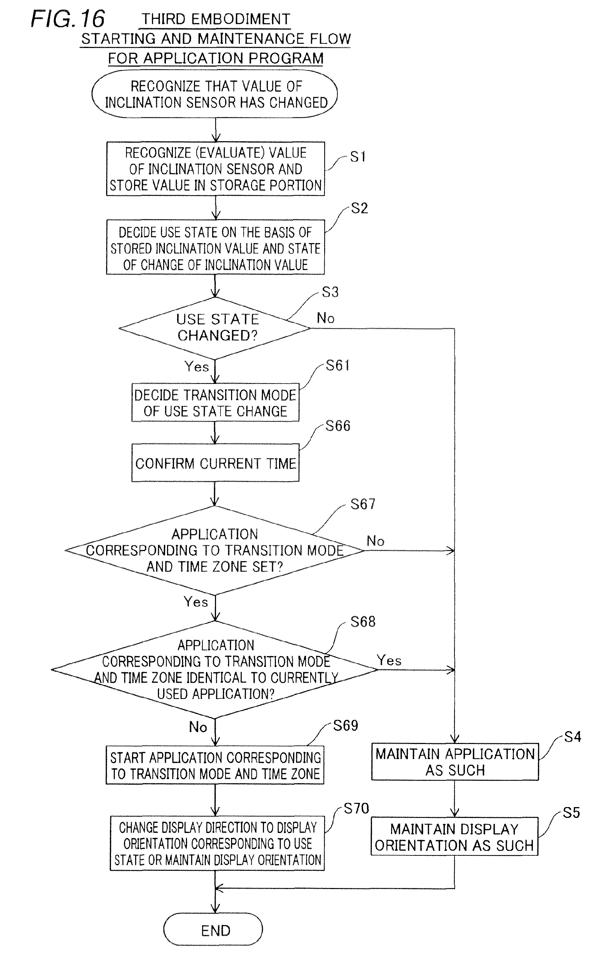

In a case where it is determined by the control portion 251 (see Fig. 7) at the step S3 that a decided state has been changed from a state (before event occurrence) before an inclination value detected by an inclination sensor 53 changes, the control portion 251 advances to a step S61, as shown in Fig. 16. At the step S61, a transition mode of state change is decided on the basis of a use state before the use state is changed and a use state where the use state is changed, and the control portion 251 advances to a step S66.

The current time is confirmed at the step S66, and the control portion 251 advances to a step S67. At the step S67, whether or not an application program corresponding to the transition mode of the changed use state and the current time zone (time) is set is determined by the control portion 251. In a case where it is determined at the step S67 that the application program corresponding to the current time zone and the transition mode of the changed use state is not set, the control portion 251 advances to the step S4 and the step S5 in this order, and the starting and maintenance flow for the application program terminates. In a case where it is determined at the step S67 that the application program corresponding to the current time zone and the transition mode of the changed use state is set, the control portion 251 advances to a step S68.

At the step S68, whether or not the set application program corresponding to the transition mode of the changed use state and the current time zone is the same application program as a currently used application program is determined by the control portion 251. In a case where it is determined at the step S68 that the application program having been set is the same application program as the currently used application program, the application program may not be changed and hence the control portion 251 advances to the step S4 and the step S5 in this order, and the starting and maintenance flow for the application program terminates. In a case where it is determined at the step S68 that the application program having been set is not the same application program as the currently used application program, the control portion 251 advances to a step S69.

Thereafter at the step S69, an application program, stored in a storage portion 52, corresponding to the transition mode of the changed use state and the current time zone is started. Then, a display direction is changed to a display orientation corresponding to the changed use state or the display orientation is maintained at a step S70, and the starting and maintenance flow for the application program terminates.

According to the third embodiment, as hereinabove described, the control portion 251 starts the application program corresponding to the use state detected by the inclination sensor 53, also corresponding to the transition mode at the time of making transition from the use state before the detected use state to the detected use state and corresponding to the current time so that the same can start the application program in consideration of not only the current use state and the current time zone but also the transition mode from the immediately precedent use state to the current use state, whereby the control portion 251 can start an application program more suitable to a use situation also in consideration of difference between use situations of the user resulting from difference between transition modes.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the example of employing the inclination sensor as an example of the use state detection means of the portable information display terminal according to the present invention has been shown in each of the aforementioned first to third embodiments, the present invention is not restricted to this. A detection means other than the inclination sensor may be employed, so far as the same is a detection means capable of detecting the three states, i.e. the two use states (the stood state and the laid-down state) where the frame and the liquid crystal display portion are placed on the placing surface and the use state where the user manually grasps the portable information display terminal.

While the example of forming the control portion to automatically start the application also in the case of changing the state to any state of the stood state, the laid-down state and the hand-held state has been shown in each of the aforementioned first to third embodiments, the present invention is not restricted to this. For example, the control portion may automatically start the application only in the case of the stood state or the laid-down state.

While such an example that the inclination sensor detects only any of the stood state where the user uses the portable information display terminal while standing the frame and the liquid crystal display portion on the placing surface, the laid-down state where the user uses the portable information display terminal while laying down the frame and the liquid crystal display portion on the placing surface and the hand-held state where the user uses the portable information display terminal while manually grasping the frame has been shown in each of the aforementioned first to third embodiments, the present invention is not restricted to this. For example, the inclination sensor may detect a use state other than the stood state, the laid-down state and the hand-held state such as a state of holding the portable information display terminal while hanging the same on a wall surface, in addition to the stood state, the laid-down state and the hand-held state.

While such an example that the inclination sensor forms the frame in the outer shape placeable in the stood state where the user uses the portable information display terminal while standing the frame and the liquid crystal display portion on the placing surface and the laid-down state where the user uses the portable information display terminal while laying down the frame and the liquid crystal display portion on the placing surface has been shown in each of the aforementioned first to third embodiments, the present invention is not restricted to this. A stand or the like of a separate member may be so mounted on the frame (housing) that the inclination sensor places the frame in the stood state where the user uses the portable information display terminal while standing the frame and the liquid crystal display portion on the placing surface and the laid-down state where the user uses the portable information display terminal while laying down the frame and the liquid crystal display portion on the placing surface.

While the example of performing processing of confirming the current time only in the case where the use state is changed has been shown in each of the aforementioned first to third embodiments, the present invention is not restricted to this. The processing of confirming the current time may be performed also in a case where the use state is not changed.

While the example of performing remote control of a control object apparatus by emitting infrared rays including remote control signals to the control object apparatus in the remote control mode has been shown in each of the aforementioned first to third embodiments, the present invention is not restricted to this. Remote control of the control object apparatus may be performed by employing a wireless communication standard such as Bluetooth (registered trademark) or Zigbee (registered trademark), for example.

While processing operations of the control portion have been described by employing the flow charts described in an event-driven manner in starting and described in a flow-driven manner as to processing operations after the starting for the convenience of illustration in each of the aforementioned first to third embodiments, the present invention is not restricted to this. The processing operations of the control portion may be performed in a complete event-driven manner, in a complete flow-driven manner, or in a parallel processing manner.

While the control portion is formed to maintain the current application program as such in the case where there is no set application program in each of the aforementioned first and third embodiments and the control portion maintains the current application program as such in the case where there is no learned application program in the second embodiment, the present invention is not restricted to these. A default application program corresponding to the use state may be started in a case where setting or learning of a started application program is not performed.

While the example of causing the storage portion to store (learn) the application program first used at least the constant time in the certain use state and starting the application program previously stored in the storage portion in the case where the portable information display terminal is switched to the use state from another use state has been shown in the aforementioned second embodiment, the present invention is not restricted to this. For example, the storage portion may be caused to store (learn) an application program finally used in a certain use state, and the control portion may start an application program previously stored in the storage portion in a case where the portable information display terminal is subsequently switched to the use state from another use state. Further, the storage portion may be caused to store (learn) an application program having the maximum frequency among frequencies of application programs used in a certain use state, and the control portion may start the application program stored in the storage portion in a case where the portable information display terminal is subsequently switched to the use state from another use state.

## Claims

1. A portable information display terminal (1) comprising:
a housing (20);
a use state detection means (53) for detecting a use state;
a time detection means (51a) detecting a current time; and
a control portion (51, 151, 251) starting an application program corresponding to the use state detected by said use state detection means and the current time detected by said time detection means.

2. The portable information display terminal according to claim 1, so formed that the user is capable of setting an application program started in response to said use state and said current time, wherein
said control portion is formed to perform control of starting said application program set by the user in response to said use state and said current time.

3. The portable information display terminal according to claim 2, wherein
setting of a starting time zone for starting the application program corresponding to said current time is so formed that at least any setting in setting of the starting time zone every day of the week, setting of the starting time zone distinguishing weekdays and holidays from each other and setting of the starting time zone without distinction of the day of the week and the holidays is possible.

4. The portable information display terminal according to claim 1, further comprising a display portion (10) displaying information, wherein
said control portion is formed to perform control capable of simultaneously parallelly starting an application program using said display portion and an application program not using said display portion when starting application programs in response to said use state and said current time.

5. The portable information display terminal according to claim 4, wherein
said use state includes a use state where the user uses the portable information display terminal while standing said housing on a placing surface, and
said control portion is formed to perform control of simultaneously parallelly starting the application program using said display portion and the application program not using said display portion in a case where the use state detected by said use state detection means is at least the use state where the user uses the portable information display terminal while standing said housing on the placing surface.

6. The portable information display terminal according to claim 4, so formed that the user is capable of setting the application program started in response to said use state and said current time, wherein
setting of the starting time zone at the time of simultaneously parallelly starting the application program using said display portion and the application program not using said display portion is formed to be independently performable for the application program using said display portion and for the application program not using said display portion.

7. The portable information display terminal according to claim 4, further comprising an image pickup portion (11) capable of picking up an image, wherein
the application program not using said display portion includes at least either one of an application program monitoring an invader with said image pickup portion and an application program transmitting information consisting of a sound to the user.

8. The portable information display terminal according to claim 1, wherein
said control portion is formed to perform control of starting an application program corresponding to the use state detected by said use state detection means, corresponding also to a transition mode at a time of making a transition from a use state before said detected use state to said detected use state, and corresponding to the current time.

9. The portable information display terminal according to claim 1, wherein
said use state includes a first use state where the user uses the portable information display terminal while manually grasping said housing, and
said control portion is formed to perform control of starting an application program corresponding to said first use state and corresponding to the current time in a case where said first use state is detected by said use state detection means.

10. The portable information display terminal according to claim 9, further comprising a display portion displaying information, wherein
said first use state includes a laterally oriented use state and a vertically oriented use state,
said use state detection means is formed to be capable of detecting the laterally oriented use state and the vertically oriented use state, and
said control portion is formed to perform control of starting an application program corresponding to said first use state and corresponding to said current time and changing the orientation of a display displayed on said display portion in response to the lateral orientation or the vertical orientation in a case where it is detected that the portable information display terminal is in said first use state.

11. The portable information display terminal according to claim 1, wherein
said use state includes a second use state where the user uses the portable information display terminal while standing said housing on a placing surface and a third use state where the user uses the portable information display terminal while laying down said housing on the placing surface, and
said control portion is formed to perform control of starting an application program not premised to be operated by the user in a case where the portable information display terminal is in said second state where the user uses the portable information display terminal while standing said housing on the placing surface and starting an application program premised to be operated by the user in a case where the portable information display terminal is in said third use state where the user uses the portable information display terminal while laying down said housing on the placing surface.

12. The portable information display terminal according to claim 1, wherein
said use state includes a second use state where the user uses the portable information display terminal while standing said housing on a placing surface and a third use state where the user uses the portable information display terminal while laying down said housing on the placing surface,
said use state detection means is formed to acquire inclinations of said housing in said second use state where the user uses the portable information display terminal while standing said housing on the placing surface and said third use state where the user uses the portable information display terminal while laying down said housing on the placing surface, and
said control portion is formed to be capable of determining and specifying said second use state and said third state on the basis of the inclinations of said housing in said second use state and said third use state acquired by said use state detection means.

13. The portable information display terminal according to claim 12, wherein
said housing has such an outer shape that said housing is placeable with different inclinations in said second use state where the user uses the portable information display terminal while standing said housing on the placing surface and said third use state where the user uses the portable information display terminal while laying down said housing on the placing surface, and
said control portion is formed to be capable of determining and specifying said second use state and said third use state based on the different inclinations of said housing in said second use state and said third use state on the basis of the outer shape of said housing acquired by said use state detection means.

14. The portable information display terminal according to claim 1, wherein
said use state includes a first use state where the user uses the portable information display terminal while manually grasping said housing, a second use state where the user uses the portable information display terminal while standing said housing on a placing surface and a third use state where the user uses the portable information display terminal while laying down said housing on the placing surface,
said use state detection means includes an inclination sensor, and
said control portion is formed to determine and specify said second use state and said third use state on the basis of an inclination angle detected by said inclination sensor, and to determine and specify said first use state on the basis of a change state of the inclination angle detected by said inclination sensor.

15. The portable information display terminal according to claim 1, so formed that the user is capable of setting validation or invalidation of a function of starting the application program corresponding to detected said use state and the current time, wherein
said control portion is formed to perform control of starting the application program corresponding to detected said use state and the current time in a case where the function of starting the application program corresponding to said use state and the current time is valid.

16. The portable information display terminal according to claim 15, wherein
said control portion is formed not to terminate but to maintain an application program having been started correspondingly to the use state detected by said use state detection means and the current time detected by said time detection means in a state before said use state is changed in a case where the function of starting the application program corresponding to said use state and the current time is invalid, also in a case where the portable information display terminal is switched from the state before the use state is changed to a state after said use state is changed.

17. The portable information display terminal according to claim 1, further comprising a storage portion (52) storing a use history of a used application program in said use state and a starting time zone, wherein
said control portion is formed to perform control of deciding and starting an application program corresponding to the detected use state and the current time on the basis of said use history stored in said storage portion.

18. The portable information display terminal according to claim 17, wherein
a history of an application program having been used for at least a prescribed time in a prescribed use state every said starting time zone is included in said use history, and
said control portion is formed to perform control of starting an application program having been used for at least said prescribed time in said starting time zone corresponding to said current time.

19. The portable information display terminal according to claim 1, wherein
said control portion is formed to be capable of starting the application program by preferentially determining a detection result of said time detection means over a detection result of said use state detection means,
said control portion is formed to perform control of starting an application program corresponding to a prescribed time when the current time detected by said time detection means and said prescribed time set while granting priority to time setting coincide with each other regardless of said use state detected by said use state detection means in a prescribed case, and
said application program started correspondingly to said prescribed time is different from an application program started correspondingly to the use state detected by said use state detection means and the current time detected by said time detection means.

20. The portable information display terminal according to claim 19, wherein
said prescribed case includes a case where an application program started by preferentially determining the detection result of said time detection means over the detection result of said use state detection means has been set by the user.
